# EUROPÄISCHE PATENTSCHRIFT

(11) **EP 2 994 651 B1**
(45) Veröffentlichungstag und Bekanntmachung des Hinweises auf die Patenterteilung: **05.06.2019**
(21) Anmeldenummer: 14719318.9
(22) Anmeldetag: 24.04.2014
(51) Int. Cl.: F16C 19/49

(54) **LAGERANORDNUNG, LAGERUNG EINER KEGELRITZELWELLE**
BEARING ASSEMBLY, MOUNTING OF A BEVEL PINION SHAFT
ENSEMBLE PALIER, MONTAGE D'UN ARBRE À PIGNON CONIQUE

(30) Priorität: 06.05.2013 DE 102013208208
(43) Veröffentlichungstag der Anmeldung: 16.03.2016
(73) Patentinhaber: Aktiebolaget SKF, 415 50 Göteborg (SE)
(72) Erfinder: HAUCK, Helmut, 97502 Euerbach (DE); WOLF, Thomas, 97422 Schweinfurt (DE)
(74) Vertreter: Kuhstrebe, Jochen
(86) Internationale Anmeldenummer: PCT/EP2014/058340
(87) Internationale Veröffentlichungsnummer: WO 2014/180669

(56) Entgegenhaltungen:
- DE-A1- 3 713 221
- DE-A1-102008 049 041
- DE-A1-102010 007 706
- DE-A1-102011 003 705
- DE-B4- 10 239 742
- DE-C2- 19 839 481
- FR-A1- 2 349 763
- FR-A5- 2 222 895
- JP-A- H02 163 509
- JP-A- 2007 192 342
- US-A1- 2005 111 771

## Beschreibung

Ausführungsbeispiele der vorliegenden Erfindung liegen auf dem Gebiet der Lageranordnung, insbesondere der Lageranordnung zur Lagerung von Wellen, die axialen und radialen Belastungen unterliegen.

Aus dem Stand der Technik sind axiale und radiale Belastungsfälle für Lager bekannt. Beispielsweise können diese in Getrieben auftreten, beispielsweise immer dann, wenn über eine Übersetzung die Rotationsebene geändert wird. Dies kann beispielsweise bei Kegelritzeln im Zusammenspiel mit Tellerrädern auftreten. Eine solche Anordnung ist z.B. aus der Druckschrift DE 198 39 481 C2 bekannt. Diese Schrift zeigt ein Verteilergetriebe für ein Kraftfahrzeug mit einer Kegelritzelwelle, die über zwei voneinander beabstandete und axial vorgespannte Wälzlager in einem Getriebegehäuse gelagert ist. Die Kegelritzelwelle ist darüber hinaus mit einem Kegelritzel versehen, welches über ein Tellerrad ein im Getriebegehäuse gelagertes Ausgleichgetriebe antreibt. Dabei sind auch im Ausgleichgetriebe Achswellen gelagert, die über Abtriebs- und Ausgleichräder miteinander in Wirkverbindung stehen. Die Wälzlager sind dabei als einseitig belastbare zweireihige Tandemschrägkugellager ausgebildet, die zueinander in O-Anordnung angestellt sind.

Darüber hinaus sind beispielsweise aus dem Dokument DE 102 39 742 B4 Schrägkugellager bekannt. Die Druckschrift zeigt ein einseitig belastbares Doppelschrägkugellager mit einem einteiligen äußeren Lagerring und einem einteiligen inneren Lagerring sowie zwei zwischen den Lagerringen angeordneten Kugelkränzen, die durch zwei Reihen in je einem Käfig geführte Lagerkugeln umfassen. Die Lagerkugeln stützen sich an in Richtung der angreifenden Kraft liegenden Schultern an den Lagerringen ab, wobei die Durchmesser der Lagerkugeln sowie die Radien ihrer Kugellaufbahnen unterschiedlich groß sind und beide Kugelkränze einen unterschiedlich großen Teilkreisradius aufweisen. Die beiden Käfige sind dabei als Fensterkäfige aus einem Kunststoff mit die Lagerkugeln aufnehmenden Taschen ausgebildet und mit einem der Lagerringe zu einer unverlierbaren Teillagerbaueinheit verbindbar. Dies kann dadurch geschehen, dass einer der beiden Käfige an seinem axialen nach innen gerichteten Ende mit mehreren, gleichmäßig in Umfangsrichtung voneinander beabstandeten und ein axiales Verschieben des anderen Käfigs verhindernden Abstandshaltern ausgebildet ist. Der Käfig kann ferner mehrere gleichmäßig in Umfangsrichtung voneinander beabstandete Haltenasen aufweisen, die in eine zugehörige Nut des inneren oder des äußeren Lagerrings eingreifen. Des Weiteren betrifft die DE 37 13 221 eine Lagereinheit mit einem Rollenlager und einem Schrägkugellager, wobei für das Schrägkugellager und das Rollenlager separate Innen und Aussenringe vorgesehen sind.

Nachteilig an diesen bekannten Konzepten ist dass die Reibungsminimierung bzw. die Lastoptimierung dieser Lager eingeschränkt ist. In anderen Worten kann die Haltbarkeit oder Widerstandsfähigkeit dieser Lager weiter verbessert werden.

Es ist daher die Aufgabe der vorliegenden Erfindung ein verbessertes Konzept für ein Lager zu schaffen, das sowohl in radialer als auch in axialer Richtung belastet wird.

Ausführungsbeispiele der vorliegenden Erfindung basieren auf der Erkenntnis, dass Reibungsreduzierung oder -minimierung und auch Lastanpassung oder -optimierung bei Kugel- oder Wälzlagern verbessert werden kann, wenn die Lasten senkrecht auf die Lager wirken. In anderen Worten ist es eine Erkenntnis, dass ein Schrägkugellager bauartbedingt einen schlechteren Wirkungsgrad als ein rein radial oder ein axial belastetes Lager aufweist. Dies gilt insbesondere dann, wenn aufgrund hoher Lasten mehrreihige Schrägkugellager, wie z.B. Tandemlager, eingesetzt werden. Es ist eine weitere Erkenntnis, dass bei einem Wälzlager mit mehr als einer Wälzkörperreihe, z.B. bei einem Kugellager mit mehr als einer Kugelreihe, eine Reihe als Schräglager, wie z.B. Schrägkugellager, und eine weitere Reihe als reines Radial- oder Axiallager ausgebildet werden kann.

Ausführungsbeispiele schaffen daher eine Lageranordnung zur Lagerung einer Welle mit einer Lageraußenringanordnung, einer Lagerinnenringanordnung, einer ersten Wälzkörperreihe zur Lagerung der Lageraußenringanordnung gegenüber der Lagerinnenringanordnung in axialer oder radialer Richtung und einer zweiten Wälzkörperreihe zur Lagerung der Lageraußenringanordnung gegenüber der Lagerinnenringanordnung in einer Richtung, die sich von der axialen und der radialen Richtung unterscheidet und als Schrägkugellager ausgeführt ist, wobei die Lagerinnenringanordnung durch eine napfförmige Komponente von der zweite Wälzkörperreihe getrennt ist und die napfförmige Komponente eine Laufläche für die zweite Wälzkörperreihe aufweist und durch ein Blech gebildet ist.

Als Wälzlager können dabei alle denkbaren Wälzlager zum Einsatz kommen, wie beispielsweise Kugellager, Kegellager, Zylinderlager, Toroidallager, Tonnenrollenlager, usw. In Ausführungsbeispielen ist demnach eine Lageraußenringanordnung gegenüber einer Lagerinnenringanordnung mit wenigstens zwei Wälzkörperreihen gelagert, wovon eine zum Abstützen von im Wesentlichen radialen oder axialen Lasten ausgebildet ist und die andere zur Abstützung von Lasten aus einer davon unterschiedlichen Richtung ausgebildet ist. In anderen Worten kann ein Winkel zwischen den Lagerreihen bestehen, welcher zwischen 0 und 90° liegt. In manchen Ausführungsbeispielen ist es denkbar, dass eine Lagerreihe als reines Radialkugellager und eine weitere Lagerreihe als Schräglager mit einem Winkel von nahezu 90°, d.h. auch mit einem Axiallager zu einer mehrreihigen Lagereinheit oder Lageranordnung kombiniert wird. In Ausführungsbeispielen sind jedoch Winkel denkbar, die gerade radiale oder axiale Komponenten mit Zwischenwinkelkomponenten, d.h. mit Winkeln zwischen 0 und 90°, kombinieren. Der Winkel zwischen der ersten, z.B. rein radialen oder axialen Lagerreihe, und der zweiten Lagerreihe befindet sich im Bereich 0 < α ≤ 90°, bevorzugt kann er sich im Bereich 0 < α ≤ 65° befinden.

Ausführungsbeispiele können daher eine Lageranordnung schaffen, die trotz mehrreihiger Wälzkörper kompakt ausgebildet ist. Dadurch können in manchen Ausführungsbeispielen reduzierte Montagekosten realisiert werden. In weiteren Ausführungsbeispielen kann eine höhere Leistungsdichte erzielt werden. Dies kann beispielsweise dadurch erzielt werden, dass bei gleicher Baugröße höhere Lasten gelagert werden können, oder aber die Baugröße bei gleichbleibender Last reduziert werden kann.

Ausführungsbeispiele schaffen demnach eine Lagerung oder eine Lageranordnung, die als mehrreihige Lagereinheit ausgeführt ist. Die Lagereinheit besteht demnach aus mindestens einer Radiallagerreihe oder einer Axiallagerreihe und einer weiteren Lagerreihe, deren Lastrichtung einen Winkel zur ersten Lagerreihe bildet, der zwischen 0 und 90° liegt.

In Ausführungsbeispielen kann die Lageraußenringanordnung der Lageranordnung zwei Laufflächen für Wälzkörper der ersten und der zweiten Wälzkörperreihe aufweisen, wobei die Lageraußenringanordnung einstückig oder mehrstückig ausgebildet sein kann. In Ausführungsbeispielen kann Gleiches auf die Lagerinnenringanordnung zutreffen, d.h. auch diese kann zwei Laufflächen für Wälzkörper der ersten und der zweiten Wälzkörperreihe aufweisen und auch die Lagerinnenringanordnung kann einstückig oder mehrstückig ausgebildet sein. Insofern umfassen Ausführungsbeispiele auch Lagereinheiten oder Lageranordnungen mit einteiligem Innenring für mindestens zwei Lagerreihen und einem mehrteiligen Außenring, bzw. Lagereinheiten mit einem einteiligen Außenring und mindestens zwei Lagerreihen mit mehrteiligem Innenring.

In weiteren Ausführungsbeispielen können, wie bereits oben erwähnt, die Wälzkörper der ersten und der zweiten Wälzkörperreihe als Kugeln, Kegel, Zylinder, Tonnen, oder Nadeln ausgebildet sein, wobei die Wälzkörper der ersten und der zweiten Wälzkörperreihe unterschiedlich ausgebildet sein können. In anderen Worten schaffen Ausführungsbeispiele Lageranordnungen, bei denen die erste Wälzkörperreihe Wälzkörper der gleichen Größe und Gestalt wie die zweite Wälzkörperreihe umfasst. In anderen Ausführungsbeispielen können die Wälzkörper der ersten und der zweiten Wälzkörperreihe auch unterschiedlich sein. Dabei ist beispielsweise denkbar, dass sie die gleiche Gestalt aufweisen, beispielsweise kugelartige Gestalt, sie sich jedoch in ihrer Größe unterscheiden. In weiteren Ausführungsbeispielen ist es denkbar, dass die Wälzkörper der ersten Wälzkörperreihe und die Wälzkörper der zweiten Wälzkörperreihe sich auch in ihrer Gestalt unterscheiden. In solchen Ausführungsbeispielen können beispielsweise zylinderförmige Wälzkörper mit Kugeln kombiniert werden, oder ähnliches.

In weiteren Ausführungsbeispielen können die Lageraußenringanordnung und/oder die Lagerinnenringanordnung eine Vertiefung mit einer Lauffläche für eine der Wälzkörperreihen aufweisen. In anderen Worten kann zumindest eine der Laufflächen, oder auch beide, direkt in die jeweilige Lagerringanordnung eingearbeitet sein. Gemäß Anspruch 1 ist eine Lagerringanordnungen durch eine napfförmige Komponente von der ersten oder der zweiten Wälzkörperreihe getrennt. Die Komponente ist gemäß Anspruch 1 durch ein Blech gebildet.

Die napfförmige Komponente weist zumindest eine Lauffläche für eine der Wälzkörperreihen auf. In anderen Worten kann in Ausführungsbeispielen vorgesehen sein, dass eine zusätzliche Komponente, beispielsweise in der Form eines Napfes, vorgesehen ist, um zumindest eine der Laufflächen oder auch beide Laufflächen zu bilden. Diese Komponente kann dann entweder in die Lageraußenringanordnung oder die Lagerinnenringanordnung angebracht werden, um eben die Lauffläche dort zu bilden.

In weiteren Ausführungsbeispielen kann die Lageranordnung wenigstens einen Käfig zur Führung der ersten oder der zweiten Wälzkörperreihen aufweisen. Dabei können getrennte oder auch kombinierte oder gekoppelte Käfige vorgesehen sein, die an die jeweiligen Wälzkörper und Lagerringanordnungen angepasst sind. Ein solcher Lagerkäfig kann ein Führungsmittel aufweisen, das mit der Lageraußenringanordnung oder der Lagerinnenringanordnung zur Führung des Lagerkäfigs relativ zur Lageraußenringanordnung oder der Lagerinnenringanordnung zusammenwirkt. Dies kann den Vorteil haben, dass die Laufbahn der jeweiligen Wälzkörper relativ zu einer der Lageranordnungen geführt werden kann. Dies kann entsprechende Vorteile hinsichtlich des Verschleißes und der Haltbarkeit des Lagers bedingen. Weitere Ausführungsbeispiele schaffen eine Lagerung zur Lagerung einer Kegelritzelwelle mit einer ersten Lageranordnung gemäß der obigen Beschreibung und einer zweiten Lageranordnung, wobei die erste Lageranordnung zur Lagerung der Kegelritzelwelle an einer dem Kegelritzel zugewandten Seite ausgebildet ist und die zweite Lageranordnung zur Lagerung der Kegelritzelwelle an einer dem Kegelritzel abgewandten Seite ausgebildet ist. Darüber hinaus kann sich bei der ersten Lageranordnung die erste Wälzkörperreihe auf der dem Kegelritzel zugewandten Seite der Lageranordnung befinden. Dementsprechend kann sich die zweite Wälzkörperreihe der ersten Lageranordnung weiter von dem Kegelritzel entfernt befinden, als die erste Wälzkörperreihe. In manchen Ausführungsbeispielen kann sich demnach die zweite Wälzkörperreihe auch an der dem Kegelritzel abgewandten Seite der Lageranordnung befinden.

In anderen Worten können Ausführungsbeispiele die Wälzlagerung einer Kegelritzelwelle beispielsweise eines KraftFahrZeug(KFZ)-Antriebsstranges vorsehen. Die Kegelritzelwelle kann dabei unter Verwendung mehrerer Lageranordnungen beispielsweise gegenüber einem Gehäuse gelagert sein. In Ausführungsbeispielen kann eine solche Lagerung zwischen der ersten Lageranordnung und der zweiten Lageranordnung einen stabilen oder verformbaren Abstandshalter umfassen. Ein solcher Abstandshalter kann den Vorteil bieten, dass die beiden Lageranordnungen auf einem definierten Abstand gehalten werden, sodass die entsprechenden Auflager gegenüber dem Gehäuse und die entsprechende Kraftverteilung definiert oder eingestellt werden können. Insofern kann die Wälzlagerung in Ausführungsbeispielen zwischen den beiden Lagern oder Lageranordnungen einen verformbaren Abstandshalter vorsehen. In anderen Worten kann der Abstandshalter verformbar sein.

In weiteren Ausführungsbeispielen kann die Lagerung dann ferner ein Vorspannelement umfassen, welches zur axialen Vorspannung der ersten Lageranordnung gegenüber der zweiten Lageranordnung ausgebildet ist. Insofern kann das Vorspannelement dazu genutzt werden, um den Abstandshalter zu verformen, d.h. um eine axiale Vorspannung auf die beiden Lageranordnungen und den dazwischen befindlichen Abstandshalter einzustellen. Ausführungsbeispiele können daher auch eine Wälzlagerung mit einem Vorspannelement schaffen, das auf der Welle sitzend zur axialen Vorspannung der beiden Lagerungen oder Lageranordnungen auf den beiden Seiten der Kegelritzelwelle dient. Hierbei kann beispielsweise ein Schraubelement zum Einsatz kommen. Wie bereits oben erwähnt, können Ausführungsbeispiele der Lageranordnung als Wälzlagerung beispielsweise auf der Ritzelkopfseite einer Ritzelwelle zum Einsatz kommen. Ein weiteres Wälzlager oder eine weitere Wälzlageranordnung kann auf der entsprechend gegenüberliegenden Seite zum Einsatz kommen. Die insofern zweite Lageranordnung kann beispielsweise ein Schräglager, ein Axiallager, ein Radiallager, eine Lageranordnung gemäß der obigen Beschreibung, oder eine gegenüber der ersten Lageranordnung spiegelbildlich angeordnete Lageranordnung umfassen. Beispielsweise können hier ebenfalls Schrägkugellager zum Einsatz kommen. Wie bereits erwähnt können in Ausführungsbeispielen Wälzlagerungen des gleichen Prinzips auf beiden Seiten der Ritzelwelle vorkommen.

In manchen Ausführungsbeispielen kann auf beiden Seiten der Ritzelwelle eine Wälzlagerung des gleichen Prinzips eingesetzt werden, die einen einteiligen Außenring und einen einteiligen Innenring umfasst. In weiteren Ausführungsbeispielen kann die jeweilige Lagerung oder Lageranordnung abgedichtet, ölgeschmiert, fettgeschmiert, usw. sein. Darüber hinaus kann ein Gehäuse der Lagerung, d.h. beispielsweise der Lagerringanordnung oder auch ein Gehäuse in dem die entsprechende Lageranordnung angebracht ist, beispielsweise aus Metall gebildet sein, z.B. aus einem Leichtmetall wie Aluminium. Ausführungsbeispiele schaffen darüber hinaus eine Kegelritzelwelle mit wenigstens einem Lagerinnenring der ersten oder der zweiten Lageranordnung gemäß einer der oben beschriebenen Lageranordnungen. Dies kann den Vorteil bieten, dass sich die Herstellkosten reduzieren, da die Lagerinnenringanordnung direkt auf der Kegelritzelwelle vorgesehen ist.

Weitere vorteilhafte Ausgestaltungen werden nachfolgend anhand von in den Zeichnungen dargestellten Ausführungsbeispielen, auf welche Ausführungsbeispiele generell jedoch nicht insgesamt beschränkt sind, näher beschrieben. Es zeigen
Fig. 1 eine Lageranordnung auf einer Kegelritzelwelle;
Fig. 2 eine weitere Lageranordnung auf einer Kegelritzelwelle mit einer Darstellung der unterschiedlichen Anstellwinkel;
Fig. 3 eine weitere Lageranordnung auf einer Kegelritzelwelle mit einer zweiten Lageranordnung und einem Abstandshalter;
Fig. 4 zeigt eine Lagerung einer Kegelritzelwelle;
Fig. 5 zeigt eine Lagerung einer Kegelritzelwelle mit einem einteiligen Lageraußenring;
Fig. 6 zeigt eine Lagerung einer Kegelritzelwelle mit unterschiedlich geteilten Lagerringen;
Fig. 7 zeigt eine Lagerung einer Kegelritzelwelle unter Verwendung unterschiedlicher Wälzkörperformen innerhalb eines Lagers;
Fig. 8 zeigt eine Lagerung einer Kegelritzelwelle unter Verwendung asymmetrischer Lager;
Fig. 9 zeigt eine Lagerung einer Kegelritzelwelle mit Radial- und Axiallagern;
Fig. 10 zeigt eine Lagerung mit einer napfförmigen Komponente;
Fig. 11 zeigt eine Kegelritzelwelle mit einem integrierten Lagerinnenring;
Fig. 12 zeigt eine Lagerung mit einem Lagerkäfig, einer Zylinderrollenreihe und einer Kugelreihe;
Fig. 13 zeigt eine Lagerung mit gemischten Wälzkörpern und einer napfförmigen Komponente;
Fig. 14 zeigt zwei napfförmige Komponenten; und
Fig. 15 zeigt zwei napfförmige Komponenten bei der eine napfförmige Komponente vier Laufflächen für eine Lageraußenringanordnung bildet.

Bei der nachfolgenden Beschreibung der beigefügten Figuren, die Ausführungsbeispiele zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

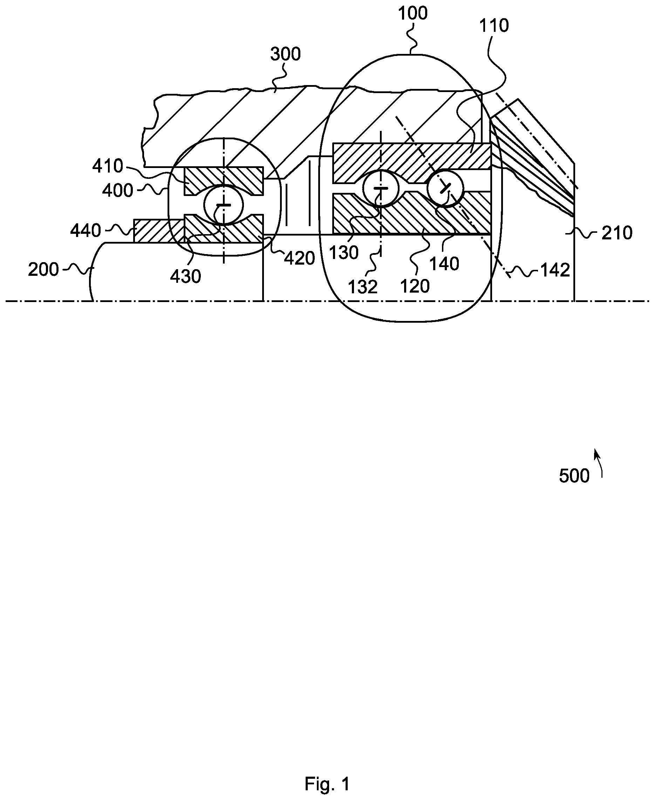

Fig. 1 zeigt eine Lagerung 100 zur Lagerung einer Welle 200, die als Kegelritzelwelle ausgebildet ist. Die Lageranordnung 100 umfasst eine Lageraußenringanordnung 110 und eine Lagerinnenringanordnung 120. Zwischen der Lageraußenringanordnung 110 und der Lagerinnenringanordnung 120 befindet sich eine erste Wälzkörperreihe 130 zur Lagerung der Lageraußenringanordnung 110 gegenüber der Lagerinnenringanordnung 120 in axialer oder radialer Richtung, wobei in der Fig. 1 zunächst die radiale Richtung veranschaulicht ist, wie die entsprechende Achse 132 veranschaulicht. Die Lageranordnung 100 umfasst ferner eine zweite Wälzkörperreihe 140 zur Lagerung der Lageraußenringanordnung 110 gegenüber der Lagerinnenringanordnung 120 in einer Richtung, die sich von der axialen bzw. der radialen Richtung 132 unterscheidet. Dies ist in der Fig. 1 durch die schräggestellte Achse 142 veranschaulicht, die zumindest näherungsweise in Richtung 45° verläuft. Die Fig. 1 zeigt darüber hinaus, dass die Lageraußenringanordnung 110 in einem Gehäuse 300 befestigt ist.

Die Lageranordnung 100 lagert somit die Kegelritzelwelle 200, die in der Fig. 1 an der rechten Seite ein Kegelritzel 210 umfasst, gegenüber dem Gehäuse 300. Insofern zeigt die Fig. 1 auch eine Lagerung zur Lagerung der Kegelritzelwelle 200 mit der ersten Lageranordnung 100 gemäß der obigen Beschreibung und einer zweiten Lageranordnung 400. Die zweite Lageranordnung lagert ebenfalls die Welle 200 gegenüber dem Gehäuse 300. In der Fig. 1 ist die zweite Lagerung 400 als ein Radialkugellager mit einem Außenring 410, einem Innenring 420 und einer Wälzkörperreihe 430 ausgebildet. Die zweite Lageranordnung 400 stützt sich dabei an einer Wellenschulter ab und ist mit einem Klemmring 440 befestigt.

Wie die Fig. 1 weiter zeigt, ist die erste Lageranordnung 100 zur Lagerung der Kegelritzelwelle 200 an einer dem Kegelritzel 210 zugewandten Seite ausgebildet und die zweite Lageranordnung 400 zur Lagerung der Kegelritzelwelle 200 an einer dem Kegelritzel 210 abgewandten Seite ausgebildet. Die insgesamt drei Wälzlagerreihen 130, 140 und 430 sind bei der Lagerung der Fig. 1 jeweils als Kugellager ausgebildet. Wie die weiteren Ausführungsbeispiele zeigen werden, können hier alle möglichen Varianten von Lagern und Wälzkörpern eingesetzt werden.

Im Folgenden wird eine Mehrzahl von Lageranordnungen beschrieben, die zum Teil die gleichen Komponenten aufweisen wie die Lageranordnung der Fig. 1. Dabei bezeichnen gleiche Bezugszeichen gleiche Komponenten. Aus Gründen der Übersichtlichkeit wird auf eine Mehrfachbeschreibung und wiederholte Bezeichnung aller Komponenten zum Teil verzichtet.

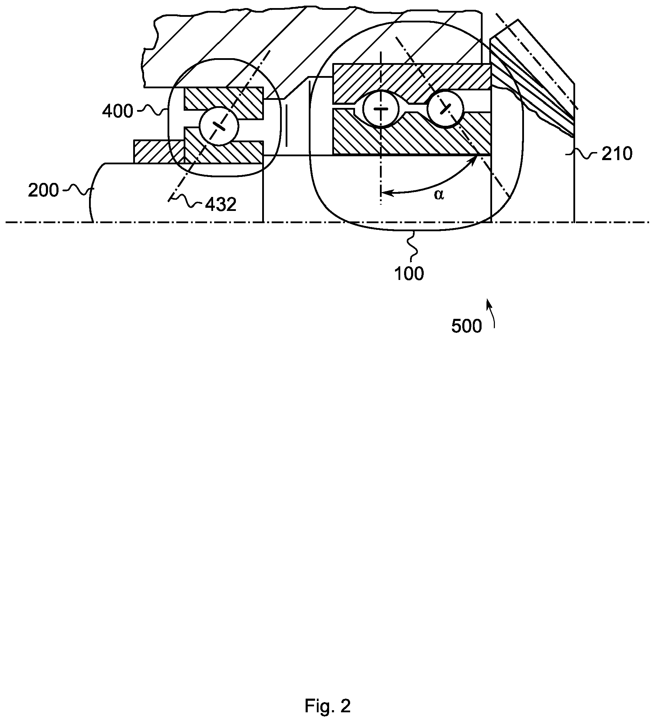

Die Fig. 2 illustriert eine weitere Lagerung 500 einer Kegelritzelwelle 200. Die erste Lageranordnung 100 ist dabei identisch zu der ersten Lageranordnung 100 der Fig. 1 aufgebaut. Zur Veranschaulichung der unterschiedlichen Winkel/Belastungsrichtungen ist in der Fig. 2 der Winkel α eingezeichnet, der die Schrägstellung der Last bzgl. der zweiten Kugelreihe 140 gegenüber der ersten Kugelreihe 130 verdeutlicht. Bei der Lagerung der Fig. 2 ist darüber hinaus die zweite Lageranordnung 400 als ein Schrägkugellager ausgebildet. Dies wird durch die schräggestellte Lastachse 432 verdeutlicht. Insofern wird noch einmal deutlich, dass die Lagereinheit oder die Lageranordnung 100 auch aus einer Radiallagerreihe besteht, die in der Fig. 1 mit 130 bezeichnet ist, und mindestens eine weitere Lagerreihe 140 umfasst, deren Lastrichtung einen Winkel zu dieser in einer reinen Radiallagerreihe 130 von 0 < α ≤ 90° aufweist. Ausführungsbeispiele sind dabei nicht auf zwei Wälzkörperreihen beschränkt. Der Winkel zwischen der ersten, z.B. rein radialen oder axialen, Lagerreihe 130 und der zweiten Lagerreihe 140 befindet sich im Bereich 0 < α ≤ 90°, bevorzugt jedoch im Bereich 0 < α ≤ 65°.

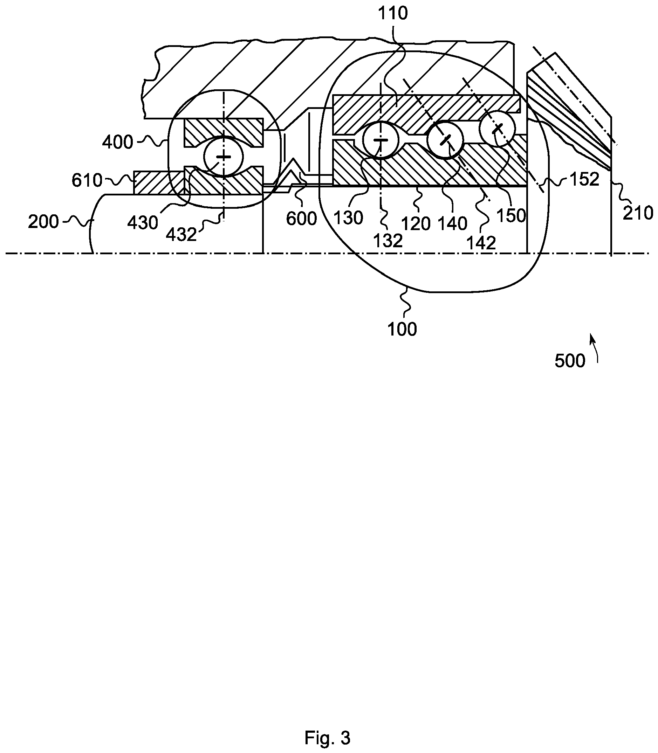

Die Fig. 3 illustriert eine weitere Lagerung in der wiederum eine Lagerung 500 für eine Kegelritzelwelle 200 mit einem Kegelritzel 210 gezeigt ist. Bei der Lagerung der Fig. 3 umfasst die erste Lageranordnung 100 nunmehr drei Wälzlagerreihen 130, 140 und 150. Dabei ist die erste Wälzlagerreihe 130 radial belastet wie die Achse 132 zeigt und die beiden nachfolgenden Wälzlagerreihen 140 und 150 sind schräg belastet wie deren beiden Achsen 142 und 152 zeigen. Ferner ist anzumerken dass sich die Wälzkörperreihen 140 und 150 in ihren Durchmessern unterscheiden, d.h. die Kugeln sind in der Wälzkörperreihe 150 kleiner als die Kugeln der Wälzkörperreihe 140. Die Fig. 3 illustriert ferner eine zweite Lageranordnung 400, die als Radialkugellager mit der Wälzkörperreihe 430 ausgebildet ist. Fig. 3 illustriert ferner, dass sich zwischen der ersten Lageranordnung 100 und der zweiten Lageranordnung 400 ein Abstandshalter 600 befindet. Dieser Abstandshalter 600 ist hier verformbar dargestellt, und hält die beiden Lageranordnungen 100 und 400 auf Abstand. Insofern übt der Klemmring, der auch als Vorspannelement 610 bezeichnet werden kann, eine axiale Kraft auf die Lageranordnung 400 und mittelbar über das Abstandselement 600 auch auf die Lageranordnung 100 aus. Die beiden Lageranordnungen 100 und 400 können somit unter axialer Vorspannung gehalten werden.

Wie die Fig. 1, 2 und 3 zeigen, können im Rahmen der Lageranordnung 100 die jeweiligen Lagerinnenringe 120 sowie die Lageraußenringe 110 einstückig ausgebildet sein. Darüber hinaus können die jeweils einstückig ausgebildeten Lagerringe entsprechende Laufflächen für die Wälzkörper vorsehen. So weisen die Lageraußenringanordnungen 110 mindestens zwei Laufflächen für Wälzkörper der ersten und der zweiten Wälzkörperreihen 130, 140 auf. Selbiges ist für die Lagerinnenringanordnung 120 in den bisher betrachteten Lageranordnungen zu beobachten, denn auch diese weisen entsprechende Laufflächen für die Wälzkörper der ersten und zweiten Wälzkörperreihe 130 und 140 auf.

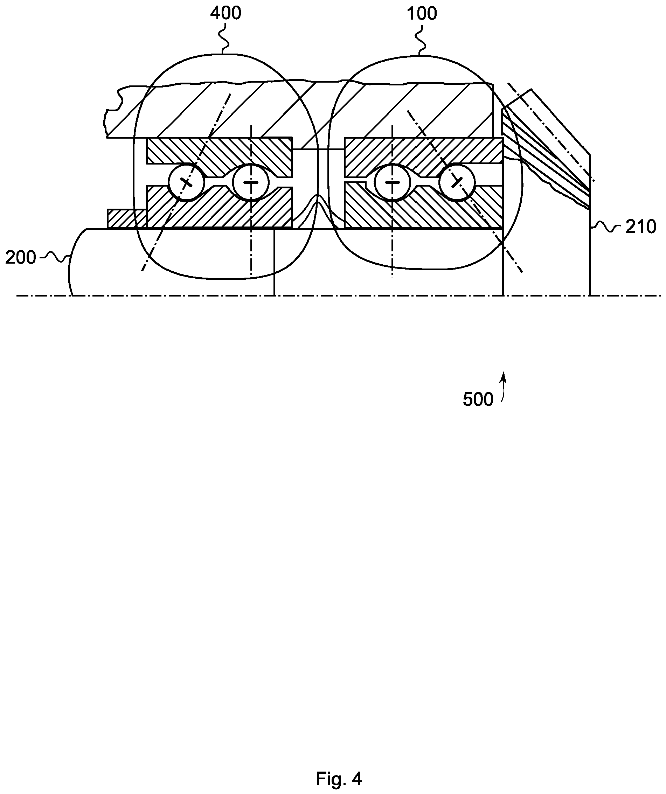

Eine weitere Lagerung ist in der Fig. 4 dargestellt. Die Fig. 4 zeigt wiederum die Lagerung 500 einer Kegelritzelwelle 200 mit einem Kegelritzel 210, wie es beispielsweise in einem Kfz-Antriebsstrang vorkommen kann. Die beiden Lageranordnungen 100 und 400 sind symmetrisch aufgebaut. In anderen Worten ist die Lageranordnung 400 auf der anderen Seite der Ritzelkopfwelle 200, d.h. auf der dem Kegelritzel 210 abgewandten Seite, um 180° gedreht im Vergleich zur Lageranordnung 100 eingebaut. Neben dieser Variante ist auch eine gleiche Orientierung, d.h. die Verwendung gleicher Lageranordnungen 100 und 400 bei anderen Lagerungen denkbar.

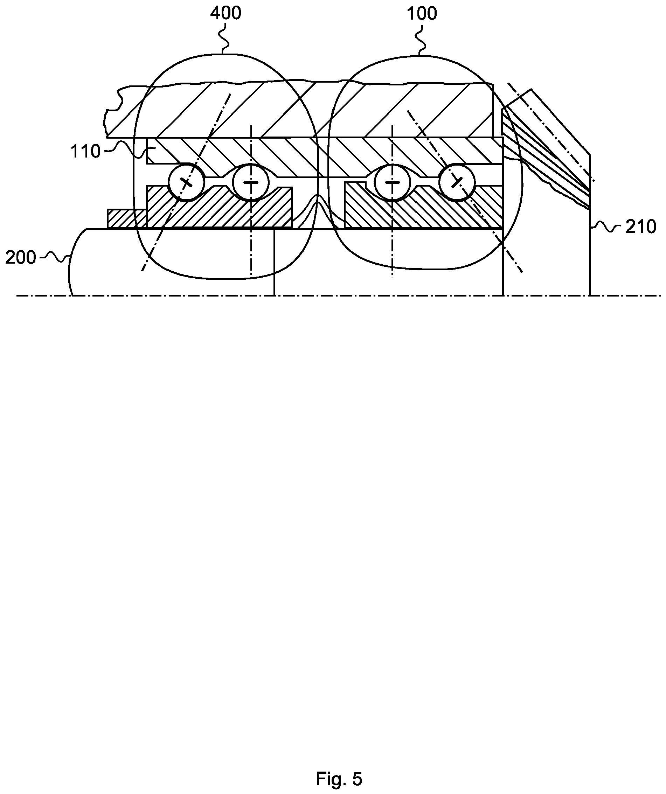

Die Fig. 5 illustriert eine weitere Lagerung, die auf der Fig. 4 aufbaut. Im Unterschied zur Fig. 4 verwenden die beiden Lageranordnungen 100 und 400 bei der Lagerung der Fig. 5 einen gemeinsamen Lageraußenring, d.h. eine gemeinsame Lageraußenringanordnung 110. Wie die Fig. 5 zeigt sind in der gemeinsamen Lageraußenringanordnung sämtliche Laufflächen für die 4 Wälzkörperreihen gebildet. Insofern umfasst die Lageranordnung 100 in der Fig. 5 einen einteiligen Außenring für mindestens zwei Lagerreihen und einen mehrteiligen Innenring. In anderen Ausführungsbeispielen sind auch ein einteiliger Innenring für mindestens zwei Lagerreihen und ein mehrteiliger Außenring denkbar.

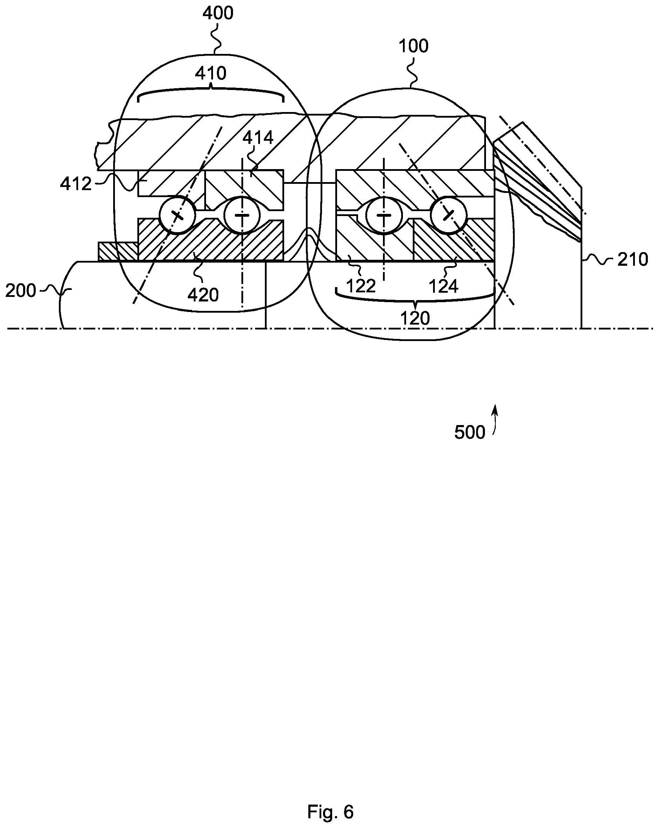

Die Fig. 6 illustriert eine weitere Lagerung mit den beiden Lageranordnungen 100 und 400. In der Fig. 6 weist die Lageranordnung 100 einen einteiligen Lageraußenring oder eine Lageraußenringanordnung 110 auf mit einer geteilten Lagerinnenringanordnung 120, die sich aus den beiden Teillagerinnenringen 122 und 124 zusammensetzt. In anderen Ausführungsbeispielen kann die Lageranordnung auch so aufgebaut sein, wie die Lageranordnung 400 in der Fig. 6 dargestellt ist. Diese weist als Lageraußenringanordnung 410 einen geteilten Lageraußenring mit den Teilen 412 und 414 auf im Zusammenspiel mit einem einstückig ausgeführten oder einteiligen Lagerinnenring 420.

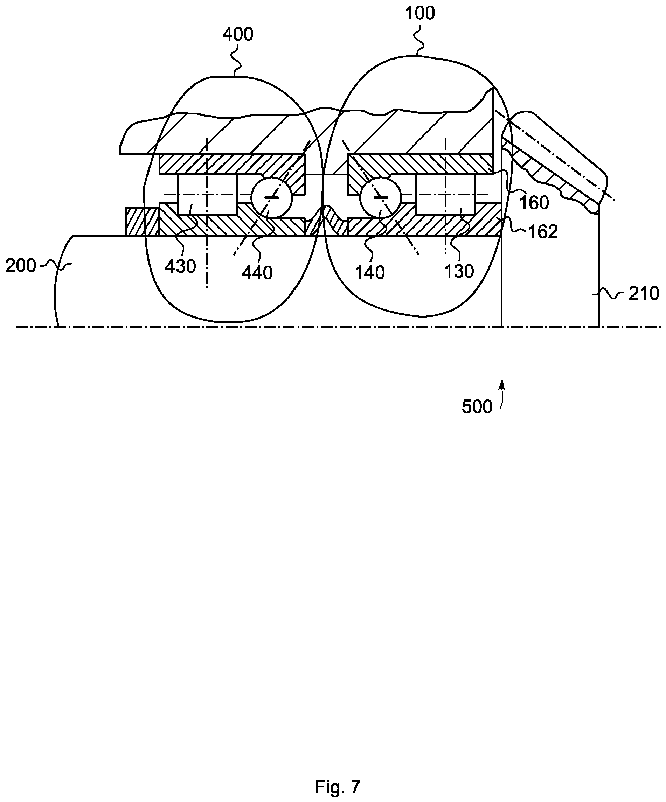

Die Fig. 7 illustriert eine Lagerung 500 mit den beiden Lageranordnungen 100 und 400. Die Lageranordnungen der Fig. 7 weisen dabei unterschiedliche Wälzkörperreihen 130, 140, 430 und 440 auf. Die erste Wälzkörperreihe 130 ist als Kegelkörperreihe oder Zylinderrollenreihe 130 ausgebildet. Die zweite Wälzkörperreihe 140 ist als Kugellagerreihe ausgebildet. Allgemein können in Ausführungsbeispielen die Wälzkörper der ersten und der zweiten Wälzkörperreihen 130, 140 beispielsweise als Kugeln, Kegel, Zylinder, Tonnen oder Nadeln ausgebildet sein. Wie die Fig. 7 zeigt, können die Wälzkörper der Wälzkörperreihen 130 und 140 auch unterschiedlich ausgebildet sein.

Die Lagerungen können insofern Wälzlagerungen 100 und 400 bereitstellen, die beispielsweise eine Kegelritzelwelle 200 eines Kfz-Antriebsstranges lagern. Wie die oben beschriebenen napfförmigen Ausgestaltungen der Lageraußenringanordnung 110 zeigen, können diese Lagerungen zumindest auf einer Seite teilweise Lagerringe mit Lagerlaufbahnen aufweisen, welche aus einem dünnen Material wie beispielsweise Stahlblech durch Umformen, z.B. Tiefziehen, hergestellt werden. In anderen Worten kann eine solche topfartige oder napfartige Form aufwandsgünstig hergestellt werden und als Lageraußenringanordnung 110 dienen. Bei weiteren Lagerungen kann die Wälzlagerung 500 beispielsweise eine Kegelritzelwelle 200 eines Kfz-Antriebsstranges auch wie oben erläutert eine gemeinsame Lageraußenringanordnung 110 für die Lageranordnung 100 und 400 umfassen.

Im Vergleich zu den oben erläuterten Figuren sind in der Fig. 7 erstmals napf-, topf-, oder auch L-förmige Komponenten 160 und 162 zu erkennen. Wie aus den vorangehenden Figuren bereits hervorging, kann die Lageraußenringanordnung 110 und/oder die Lagerinnenringanordnung 120 Vertiefungen mit Laufflächen für die Wälzkörperreihen 130 und 140 aufweisen. In der Fig. 7 sind die Lagerringanordnungen 110 und 120 als Komponenten gebildet, die von ihrer Gestalt einem Napf ähneln. Insofern ist die Lageraußenringanordnung 160 als eine napfförmige, topfförmige, oder im Querschnitt nahezu L-förmige Komponente gebildet, die die Laufflächen für die Wälzkörper, in der Fig. 7 als Kugeln und Kegel, bereitstellt. In anderen Lagerungen kann eine solche napfförmige Komponente auch zwischen die Wälzkörper und die eigentliche Lageraußenringanordnung 110 oder Lagerinnenringanordnung 120 gebracht werden, wie im Folgenden noch näher erläutert werden wird. In anderen Worten kann in manchen Fällen eine Lagerringanordnung 110, 120 eine napfförmige Gestalt 160, 162 aufweisen.

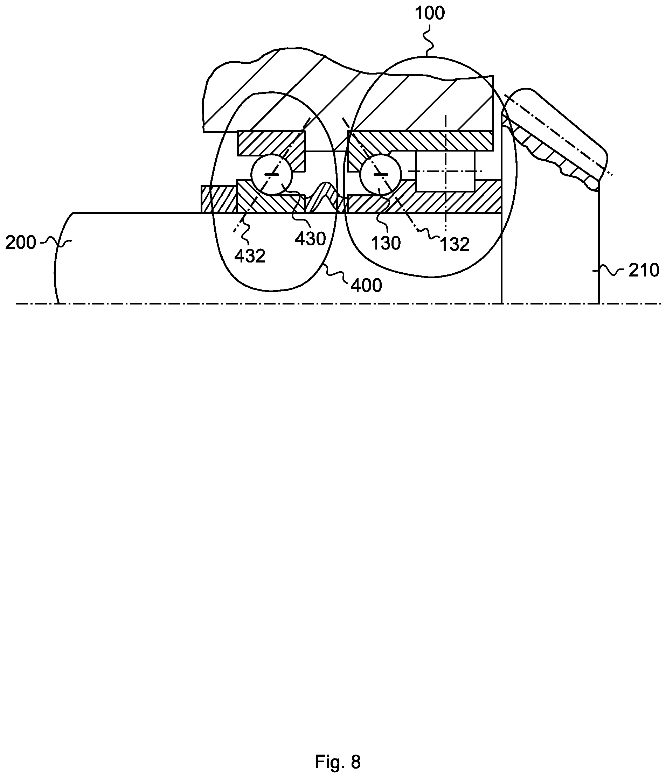

Die Fig. 8 illustriert eine weitere Lagerung bei der die zweite Lageranordnung 400 nur eine Wälzkörperreihe 430 aufweist. Wie aus Vergleich der beiden Lastrichtungen 432 für die Wälzkörperreihe 430 der Lageranordnung 400 mit der Lastachse 132 der Wälzkörperreihe 130 der Lageranordnung 100 hervorgeht, bilden diese beiden Lager eine O-Anordnung. Dies kann Vorteile bei der Lastverteilung bieten. In anderen Fällen ist selbstverständlich auch eine X-Anordnung denkbar.

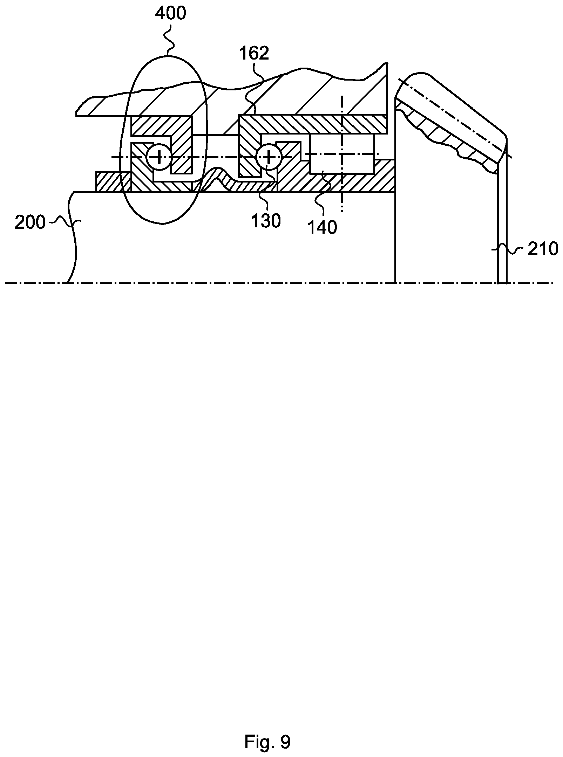

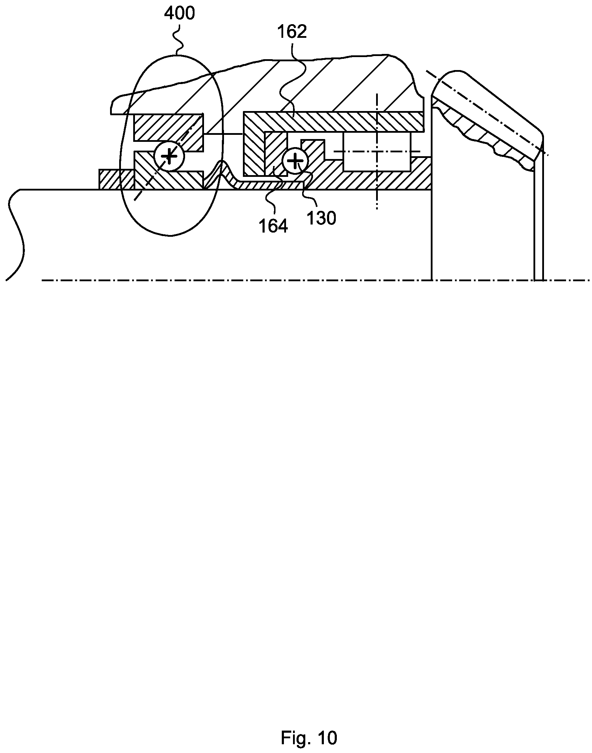

Eine weitere Lagerung ist in der Fig. 9 dargestellt. Fig. 9 zeigt eine Lagerung mit einem Winkelunterschied der Lastwinkel innerhalb der Lageranordnung 100 von nahezu 90°. Die Fig. 9 zeigt dabei einen napfförmigen Lageraußenring, der durch den Boden des Napfes, der dem kurzen Schenkel der L-förmigen Struktur 162 in der Fig. 9 entspricht, die Lauffläche für die Wälzkörperreihe 130 schafft. Diese bildet ein Axiallager. Die zweite Wälzkörperreihe ist durch die Kegelrollenreihe 140 gebildet und stellt ein Radiallager dar. Die Lageranordnung 400 ist ebenfalls als Axiallager ausgebildet, das Lasten in entgegengesetzter (axialer) Richtung im Vergleich zur Axiallagerreihe 130 aufnimmt. Bei der Lagerung der Fig. 9 weist die Lageraußenringanordnung 110 eine napfförmige Gestalt auf in deren Bodenbereich sich die Laufbahn oder auch ein separater Laufring einer weiteren Lagerreihe befinden kann. Eine solche Lagerung ist in der Fig. 10 dargestellt. Die Fig. 10 zeigt an der Stelle der Lauffläche der Wälzkörperreihe 130 einen Ring 164, der die Lauffläche für die Wälzkörperreihe 130 bildet. Als Beispiel einer weiteren Ausgestaltung ist die Lageranordnung 400 in der Fig. 10 als Schrägkugellager gezeigt. Die Fig. 10 zeigt, dass sich am Boden der napfförmigen Gestalt des Lageraußenringes 162 der Ring 164 befindet, und die entsprechende Lauffläche bildet.

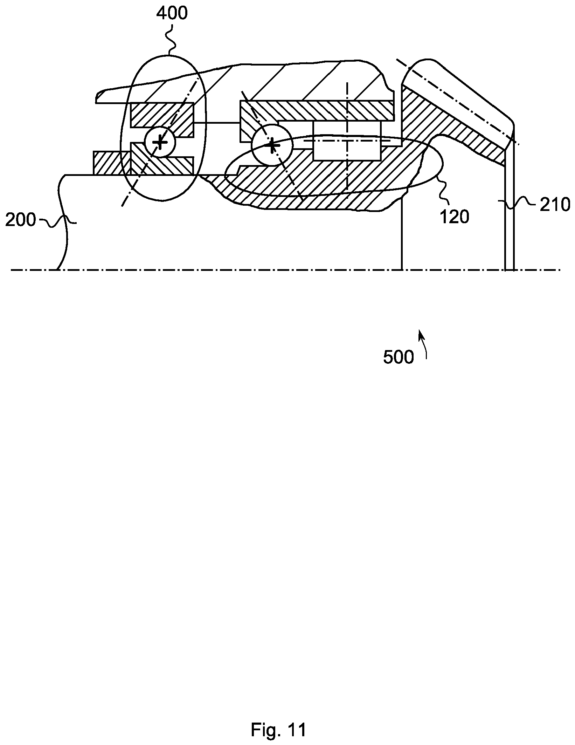

Fig. 11 illustriert weitere Lageranordnungen 100 und 400, wobei die Kegelritzelwelle 200 zur Lagerung 500 den Lagerinnenring 120 bereits integriert hat, d.h. bei der Lagerung der Fig. 11 ist die Welle 200 einstückig mit dem Lagerinnenring oder der Lagerinnenringanordnung 120 der ersten Lageranordnung 100 ausgebildet. In weiteren Fällen kann eine entsprechende Welle 200 selbstverständlich auch eine Lagerinnenringanordnung 420 der zweiten Lageranordnung 400 umfassen. Insofern können Lageranordnungen auch Wälzlagerungen einer Kegelritzelwelle 200 eines Kfz-Antriebsstranges bereitstellen, wobei die Wälzlagerungen 100 und 400 auf zumindest einer Seite zumindest teilweise Lagerringe mit Lagerlaufbahnen aufweisen, welche in die Welle 200 integriert sind.

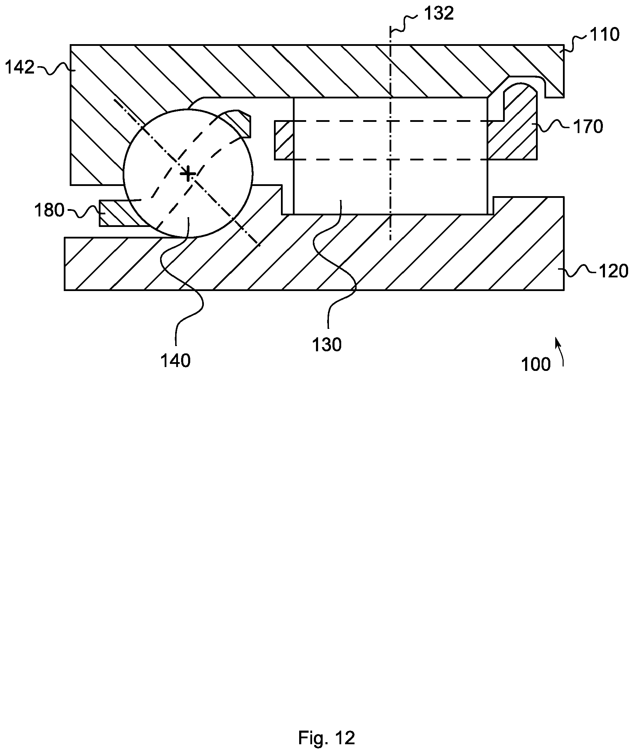

Die Fig. 12 illustriert eine weitere Lageranordnung 100, mit einer ersten Wälzkörperreihe 130, die als Kegelrollenreihe ausgebildet ist und einer zweiten Wälzkörperreihe 140, die als Kugelreihe als Teil eines Schrägkugellagers ausgebildet ist. Die Kegelrollenreihe dient insofern als Radiallager und die Kugelreihe als Schrägkugellager, wie die beiden Achsen 132 und 142 zeigen. Die Fig. 12 illustriert eine Wälzlagereinheit 100 mit Wälzkörperreihen 130 und 140, die mittels eines Käfigs oder einer Käfigkomponente 170, 180, welche in eine Führungsnut bevorzugt im Außenring 110 eingreift/eingeschnappt ist, geführt werden. Dabei zeigt die Fig. 12 zwei Käfigkomponenten 170 und 180, die die beiden Wälzkörperreihen getrennt voneinander führen. Für beide Käfigkomponenten 170 und 180 kann jedoch eine Führungsnut in einem der Lagerringe 110 oder 120 vorgesehen sein. Die Fig. 12 zeigt insofern eine Lageranordnung 100, die wenigstens einen Lagerkäfig 170 oder 180 zur Führung der ersten oder der zweiten Wälzkörperreihen 130 und 140 aufweist. Der Lagerkäfig 170 bzw. 180 umfasst ferner ein Führungsmittel, beispielsweise in Form einer Nut oder einer Nase, das mit der Lageraußenringanordnung 110 oder der Lagerinnenringanordnung 120 zur Führung des Lagerkäfigs 170 oder 180 relativ zur Lageraußenringanordnung 120 oder der Lagerinnenringanordnung 110 zusammenwirkt. In analoger Weise kann die Lagerinnenringanordnung 120 oder die Lageraußenringanordnung 110 eine entsprechende Nut aufweisen, in die eine entsprechende Nase oder ein Fortsatz eines Lagerkäfigs 170 oder 180 eingreifen kann, um dann am Lagerkäfig geführt zu werden.

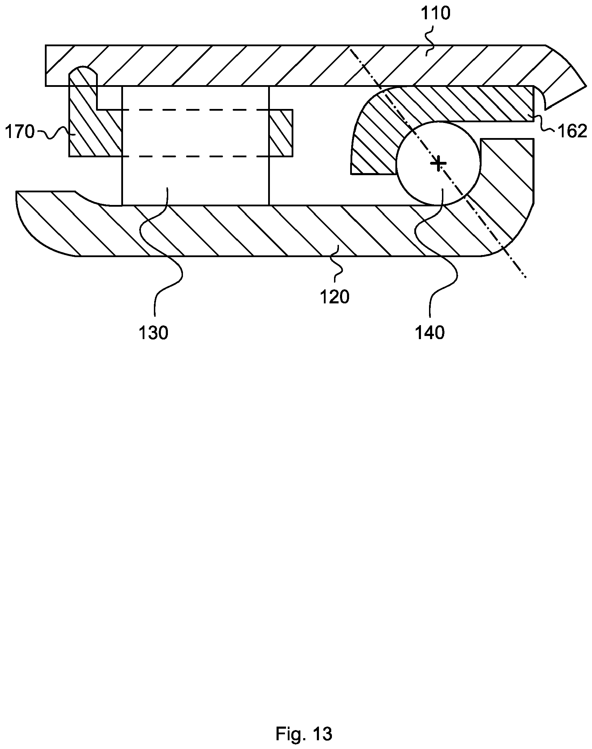

Fig. 13 illustriert eine Lagerung bei der eine erste Wälzkörperreihe 130 als Zylinderrollenreihe ausgeführt ist, die von einem Käfig 170 geführt wird. Darüber hinaus befindet sich zwischen der zweiten Wälzkörperreihe 140 und der Lageraußenringanordnung 110 eine napfförmige Komponente 162, die hier eine Lauffläche für die zweite Wälzkörperreihe 140 bildet, die in diesem Ausführungsbeispiel als Schrägkugellager ausgeführt ist.

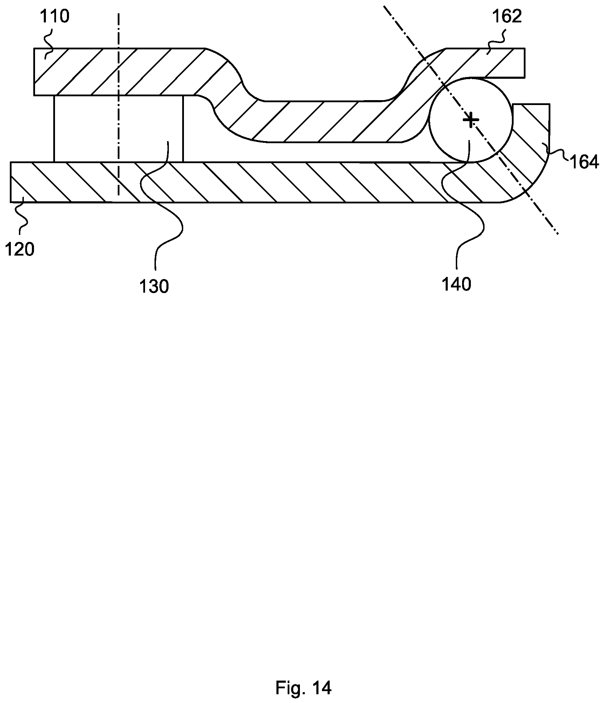

Die Fig. 14 zeigt eine weitere napfförmige Ausgestaltung oder napfförmige Komponenten 162 und 164, die in diesem Fall sowohl als Lageraußenringanordnung 110 als auch als Lagerinnenringanordnung 120 dienen. Dabei wird die erste Wälzkörperreihe 130 wiederum durch Kegelrollen gebildet und die zweite Wälzkörperreihe 140 durch entsprechende Kugeln. Wie die napfförmigen Komponenten 162 und 164 zeigen, bildet die zweite Wälzkörperreihe 140 hier ein Schrägkugellager. Dies wird dadurch erreicht, dass die napfförmige Komponente beispielsweise durch Tiefziehen oder Kaltverformen eines Bleches in eine entsprechende Form gebracht wird. Zur Verstärkung können sich darüber hinaus zwischen den jeweiligen napfförmigen Anordnungen und der Welle 200 bzw. dem Gehäuse 300 noch weitere Komponenten befinden.

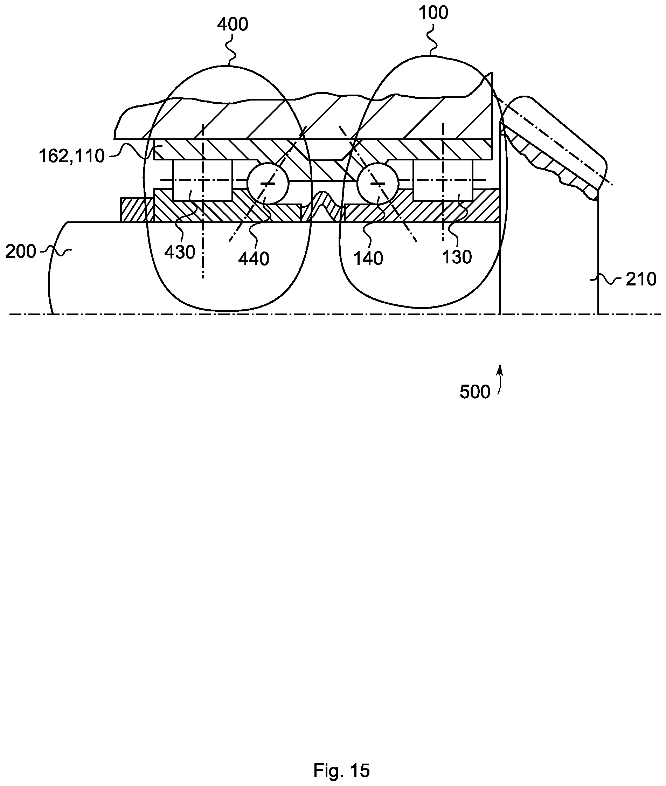

Schließlich zeigt die Fig. 15 eine weitere Lagerung der Kegelritzelwelle 200 mit dem Kegelritzel 210. Wie in der Fig. 15 gezeigt, verfügen die beiden gezeigten Lageranordnungen 100 und 400 über eine gemeinsame Lageraußenringanordnung 110, die vorliegend als besagtes napfförmiges Teil oder Komponente 162 gebildet ist. Darüber hinaus sind in der Fig. 15 insgesamt vier Wälzkörperreihen gezeigt, wobei die beiden Wälzkörperreihen 430 und 130 als Kegelrollen ausgebildet sind und die beiden Wälzkörperreihen 140 und 440 zwei Schrägkugellager in O-Anordnung bilden.

Die Figuren 7 bis 10 sowie 15 zeigen dabei Lagerungen, bei denen sich bei der ersten Lageranordnung 100 die erste Wälzkörperreihe 130, die eine axiale oder radiale Lagerung realisiert, auf der dem Kegelritzel 210 zugewandten Seite der Lageranordnung 100 befinden. Dementsprechend befindet sich die zweite Wälzkörperreihe 140 der ersten Lageranordnung 100 weiter von dem Kegelritzel 210 entfernt als die erste Wälzkörperreihe 130. Diese Lagerungen zeigen die zweite Wälzkörperreihe 140 an der dem Kegelritzel 210 abgewandten Seite der Lageranordnung 100.

In Ausführungsbeispielen können die entsprechenden Lagerungen darüber hinaus entsprechend abgedichtet, ölgeschmiert und fettgeschmiert sein. Hinsichtlich der verwendeten Materialien können für die Lagerringanordnungen das Gehäuse und die Welle entsprechende Metalle eingesetzt werden. Beispielsweise kann ein Gehäuse durch Leichtmetall wie Aluminium gebildet werden.

Die in der vorstehenden Beschreibung, und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden. Der Schutzumfang ist auf die nachfolgende Ansprüche begrenzt.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 100: Lageranordnung
- 110: Lageraußenringanordnung
- 120: Lagerinnenringanordnung
- 130: Erste Wälzkörperreihe
- 132: Belastungsrichtung/-achse erste Wälzkörperreihe
- 140: Zweite Wälzkörperreihe
- 142: Belastungsrichtung/-achse zweite Wälzkörperreihe
- 150: Dritte Wälzkörperreihe
- 152: Belastungsrichtung dritte Wälzkörperreihe
- 122: Lagerinnenteilring
- 124: Lagerinnenteilring
- 160: Napfförmige Komponente
- 162: Napfförmige Komponente
- 164: Ring mit Lauffläche
- 170: Lagerkäfig
- 180: Lagerkäfig
- 200: Welle
- 210: Kegelritzel
- 300: Gehäuse
- 400: Lageranordnung
- 410: Lageraußenringanordnung
- 420: Lagerinnenringanordnung
- 430: Wälzkörperreihe
- 432: Belastungsrichtung/-achse Wälzkörperreihe
- 440: Klemmring
- 500: Lagerung
- 600: Abstandshalter
- 610: Vorspannelement

## Patentansprüche

1. Lageranordnung (100) zur Lagerung einer Welle (200) mit einer Lageraußenringanordnung (110), einer Lagerinnenringanordnung (120), einer ersten Wälzkörperreihe (130) zur Lagerung der Lageraußenringanordnung (110) gegenüber der Lagerinnenringanordnung (120) in axialer oder radialer Richtung und einer zweiten Wälzkörperreihe (140) zur Lagerung der Lageraußenringanordnung (110) gegenüber der Lagerinnenringanordnung (120) in einer Richtung, die sich von der axialen und der radialen Richtung unterscheidet und als Schrägkugellager ausgeführt ist, **dadurch gekennzeichnet, dass** die Lagerinnenringanordnung (120) durch eine napfförmige Komponente (160; 162) von der zweiten Wälzkörperreihe (130; 140) getrennt ist und die napfförmige Komponente (160; 162) zumindest eine Lauffläche für die zweite Wälzkörperreihe (130; 140) aufweist, wobei die napfförmige Komponente (160; 162) in der Lagerinnenringanordnung angebracht ist, und wobei die napfförmige Komponente (160; 162) durch ein Blech gebildet ist

2. Lageranordnung (100) gemäß Anspruch 1, wobei die Lageraußenringanordnung (110) zwei Laufflächen für Wälzkörper der ersten und der zweiten Wälzkörperreihen (130; 140) aufweist und wobei die Lageraußenringanordnung (110) einstückig oder mehrstückig ausgebildet ist, und/oder wobei die Lagerinnenringanordnung (120) zwei Laufflächen für Wälzkörper der ersten und der zweiten Wälzkörperreihen (130; 140) aufweist und wobei die Lagerinnenringanordnung (110) einstückig oder mehrstückig ausgebildet ist.

3. Lageranordnung (100) gemäß einem der vorangehenden Ansprüche, wobei die Wälzkörper der ersten und der zweiten Wälzkörperreihe (130; 140) als Kugeln, Kegel, Zylinder, Tonnen oder Nadeln ausgebildet sind, und wobei die Wälzkörper der ersten und der zweiten Wälzkörperreihe (130; 140) unterschiedlich ausgebildet sind.

4. Lageranordnung (100) gemäß einem der vorangehenden Ansprüche, wobei die Lageraußenringanordnung (110) und/oder die Lagerinnenringanordnung (120) eine Vertiefung mit einer Lauffläche für eine der Wälzkörperreihen (130; 140) aufweist.

5. Lageranordnung (100) gemäß einem der vorangehenden Ansprüche, die wenigstens einen Lagerkäfig (170; 180) zur Führung der ersten oder der zweiten Wälzkörperreihen (130; 140) aufweist, wobei der Lagerkäfig (170; 180) ein Führungsmittel aufweist, das mit der Lageraußenringanordnung (110) oder der Lagerinnenringanordnung (120) zur Führung des Lagerkäfigs (170; 180) relativ zur Lageraußenringanordnung (120) oder der Lagerinnenringanordnung (110) zusammenwirkt.

6. Lagerung (500) zur Lagerung einer Kegelritzelwelle (200) mit einer ersten Lageranordnung (100) gemäß einem der vorangehenden Ansprüche und einer zweiten Lageranordnung (400), wobei die erste Lageranordnung (100) zur Lagerung der Kegelritzelwelle (200) an einer dem Kegelritzel (210) zugewandten Seite ausgebildet ist und die zweite Lageranordnung (400) zur Lagerung der Kegelritzelwelle (200) an einer dem Kegelritzel (210) abgewandten Seite ausgebildet ist.

7. Lagerung (500) gemäß Anspruch 6, wobei sich bei der ersten Lageranordnung (100) die erste Wälzkörperreihe (130) auf der dem Kegelritzel (210) zugewandten Seite der Lageranordnung (100) befindet und/ oder wobei die Lagerung (500) ferner einen zwischen der ersten Lageranordnung (100) und der zweiten Lageranordnung (400) befindlichen stabilen oder verformbaren Abstandshalter (600) umfasst.

8. Lagerung (500) gemäß einem der Ansprüche 6 oder 7, die ferner ein Vorspannelement (610) umfasst, welches zur axialen Vorspannung der ersten Lageranordnung (100) gegenüber der zweiten Lageranordnung (400) ausgebildet ist.

9. Lagerung (500) gemäß einem der Ansprüche 6 bis 8, wobei die zweite Lageranordnung (400) einem Schräglager, einem Axiallager, einem Radiallager, einer Lageranordnung (100) gemäß einem der Ansprüche 1 bis 5, oder einer gegenüber der ersten Lageranordnung (100) spiegelbildlich angeordneten Lageranordnung (100) gemäß einem der Ansprüche 1 bis 5 entspricht.

10. Kegelritzelwelle (200) zur Lagerung (500) gemäß einem der Ansprüche 6 bis 9, wobei die Kegelritzelwelle (200) wenigstens einen Lagerinnenring (120; 420) der ersten oder der zweiten Lageranordnung (100; 400) umfasst.

## Claims

1. Bearing arrangement (100) for mounting a shaft (200) with a bearing outer ring arrangement (110), a bearing inner ring arrangement (120), a first rolling body row (130) for mounting the bearing outer ring arrangement (110) with respect to the bearing inner ring arrangement (120) in the axial or radial direction, and a second rolling body row (140) for mounting the bearing outer ring arrangement (110) with respect to the bearing inner ring arrangement (120) in a direction which differs from the axial and the radial direction and is configured as an angular contact ball bearing, **characterized in that** the bearing inner ring arrangement (120) is separated from the second rolling body row (130; 140) by way of a bowl-shaped component (160; 162), and the bowl-shaped component (160; 162) has at least one running face for the second rolling body row (130; 140), the bowl-shaped component (160; 162) being attached in the bearing inner ring arrangement, and the bowl-shaped component (160; 162) being formed by way of a metal sheet.

2. Bearing arrangement (100) according to Claim 1, the bearing outer ring arrangement (110) having two running faces for rolling bodies of the first and the second rolling body rows (130; 140), and the bearing outer ring arrangement (110) being configured in one piece or in multiple pieces, and/or the bearing inner ring arrangement (120) having two running faces for rolling bodies of the first and the second rolling body rows (130; 140), and the bearing inner ring arrangement (110) being configured in one piece or in multiple pieces.

3. Bearing arrangement (100) according to either of the preceding claims, the rolling bodies of the first and second rolling body row (130; 140) being configured as balls, cones, cylinders, barrels or needles, and the rolling bodies of the first and the second rolling body row (130; 140) being of different configuration.

4. Bearing arrangement (100) according to one of the preceding claims, the bearing outer ring arrangement (110) and/or the bearing inner ring arrangement (120) having a depression with a running face for one of the rolling body rows (130; 140).

5. Bearing arrangement (100) according to one of the preceding claims which has at least one bearing cage (170; 180) for guiding the first or the second rolling body rows (130; 140), the bearing cage (170; 180) having a guide means which interacts with the bearing outer ring arrangement (110) or the bearing inner ring arrangement (120) for guiding the bearing cage (170; 180) relative to the bearing outer ring arrangement (120) or the bearing inner ring arrangement (110).

6. Bearing system (500) for mounting a bevel pinion shaft (200) having a first bearing arrangement (100) according to one of the preceding claims and a second bearing arrangement (400), the first bearing arrangement (100) being configured for mounting the bevel pinion shaft (200) on a side which faces the bevel pinion (210), and the second bearing arrangement (400) being configured for mounting the bevel pinion shaft (200) on a side which faces away from the bevel pinion (210).

7. Bearing system (500) according to Claim 6, the first rolling body row (130) being situated in the case of the first bearing arrangement (100) on that side of the bearing arrangement (100) which faces the bevel pinion (210), and/or the bearing system (500) comprising, furthermore, a stable or deformable spacer element (600) which is situated between the first bearing arrangement (100) and the second bearing arrangement (400).

8. Bearing system (500) according to either of Claims 6 and 7 which, furthermore, comprises a prestressing element (610) which is configured for axially prestressing the first bearing arrangement (100) with respect to the second bearing arrangement (400).

9. Bearing system (500) according to one of Claims 6 to 8, the second bearing arrangement (400) corresponding to an angular contact bearing, an axial bearing, a radial bearing, a bearing arrangement (100) according to one of Claims 1 to 5, or a bearing arrangement (100) according to one of Claims 1 to 5 which is arranged in a mirror-inverted manner with respect to the first bearing arrangement (100).

10. Bevel pinion shaft (200) for the bearing system (500) according to one of Claims 6 to 9, the bevel pinion shaft (200) comprising at least one bearing inner ring (120; 420) of the first or the second bearing arrangement (100; 400).

## Revendications

1. Ensemble palier (100) servant à supporter un arbre (200), comprenant un ensemble bague extérieure de palier (110), un ensemble bague intérieure de palier (120), une première rangée de corps de roulement (130) servant à supporter l'ensemble bague extérieure de palier (110) par rapport à l'ensemble bague intérieure de palier (120) dans la direction axiale ou radiale et une deuxième rangée de corps de roulement (140) servant à supporter l'ensemble bague extérieure de palier (110) par rapport à l'ensemble bague intérieure de palier (120) dans une direction qui diffère de la direction axiale et de la direction radiale, et qui est réalisé sous forme de palier à billes à contact oblique, **caractérisé en ce que** l'ensemble bague intérieure de palier (120) est séparé de la deuxième rangée de corps de roulement (130 ; 140) par un composant (160 ; 162) en forme de cuvette, et le composant (160 ; 162) en forme de cuvette comprend au moins une surface de roulement pour la deuxième rangée de corps de roulement (130 ; 140), le composant (160 ; 162) en forme de cuvette étant installé dans l'ensemble bague intérieure de palier, et le composant (160 ; 162) en forme de cuvette étant formé par une tôle.

2. Ensemble palier (100) selon la revendication 1, dans lequel l'ensemble bague extérieure de palier (110) comprend deux surfaces de roulement pour des corps de roulement des première et deuxième rangées de corps de roulement (130 ; 140), et dans lequel l'ensemble bague extérieure de palier (110) est réalisé en une pièce ou en plusieurs pièces, et/ou dans lequel l'ensemble bague intérieure de palier (120) comprend deux surfaces de roulement pour des corps de roulement des première et deuxième rangées de corps de roulement (130 ; 140), et dans lequel l'ensemble bague intérieure de palier (110) est réalisé en une pièce ou en plusieurs pièces.

3. Ensemble palier (100) selon l'une des revendications précédentes, dans lequel les corps de roulement de la première et de la deuxième rangée de corps de roulement (130 ; 140) sont réalisés sous forme de billes, de cônes, de cylindres, de rouleaux ou d'aiguilles, et dans lequel les corps de roulement de la première et de la deuxième rangée de corps de roulement (130 ; 140) sont réalisés de manière différente.

4. Ensemble palier (100) selon l'une des revendications précédentes, dans lequel l'ensemble bague extérieure de palier (110) et/ou l'ensemble bague intérieure de palier (120) comprend/comprennent un évidement doté d'une surface de roulement pour l'une des rangées de corps de roulement (130 ; 140).

5. Ensemble palier (100) selon l'une des revendications précédentes, lequel comprend au moins une cage de palier (170 ; 180) servant au guidage de la première ou de la deuxième rangée de corps de roulement (130 ; 140), dans lequel la cage de palier (170 ; 180) comprend un moyen de guidage qui coopère avec l'ensemble bague extérieure de palier (110) ou l'ensemble bague intérieure de palier (120) pour le guidage de la cage de palier (170 ; 180) par rapport à l'ensemble bague extérieure de palier (120) ou à l'ensemble bague intérieure de palier (110).

6. Support sur palier (500) servant à supporter un arbre à pignon conique (200), comprenant un premier ensemble palier (100) selon l'une des revendications précédentes et un deuxième ensemble palier (400), dans lequel le premier ensemble palier (100) est conçu pour supporter l'arbre à pignon conique (200) sur un côté tourné vers le pignon conique (210) et le deuxième ensemble palier (400) est conçu pour supporter l'arbre à pignon conique (200) sur un côté opposé au pignon conique (210).

7. Support sur palier (500) selon la revendication 6, dans lequel, dans le premier ensemble palier (100), la première rangée de corps de roulement (130) se trouve sur le côté de l'ensemble palier (100) tourné vers le pignon conique (210) et/ou dans lequel le support sur palier (500) comporte en outre une pièce d'écartement (600) stable ou déformable se trouvant entre le premier ensemble palier (100) et le deuxième ensemble palier (400).

8. Support sur palier (500) selon la revendication 6 ou 7, lequel comporte en outre un élément de précontrainte (610), lequel est conçu pour la précontrainte axiale du premier ensemble palier (100) par rapport au deuxième ensemble palier (400).

9. Support sur palier (500) selon l'une des revendications 6 à 8, dans lequel le deuxième ensemble palier (400) correspond à un palier à contact oblique, un palier axial, un palier radial, un ensemble palier (100) selon l'une des revendications 1 à 5, ou un ensemble palier (100), disposé suivant une symétrie miroir par rapport au premier ensemble palier (100), selon l'une des revendications 1 à 5.

10. Arbre à pignon conique (200) pour le support sur palier (500) selon l'une des revendications 6 à 9, dans lequel l'arbre à pignon conique (200) comporte au moins une bague intérieure de palier (120 ; 420) du premier ou du deuxième ensemble palier (100 ; 400).
